# EUROPEAN PATENT APPLICATION

(11) **EP 4 783 532 A1**
(43) Date of publication of application: **29.07.2026**
(21) Application number: 24869646.0
(22) Date of filing: 01.04.2024
(51) Int. Cl.: H04L 41/0896

(54) **SERVICE TRANSMISSION METHOD AND SERVICE PATH EXPANSION METHOD**

(30) Priority: 27.09.2023 CN 202311279733
(71) Applicant: ZTE CORPORATION, Shenzhen, Guangdong 518057 (CN)
(72) Inventor: LIANG, Shuang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/085173
(87) International publication number: WO 2025/066076

(57) **Abstract**

The present application belongs to the technical field of communications, and discloses a service transmission method and a service path expansion method. The method comprises: in response to accessing a third network element between a first network element and a second network element, constructing, by means of a port fine granularity of the third network element, a second fine-granularity channel corresponding to a first fine-granularity channel, the third network element being a network element used for capacity expansion, and the first fine-granularity channel being a fine-granularity channel between the first network element and the second network element before accessing the third network element.

## Description

### CROSS-REFERENCE TO RELATED APPLICATIONS

The present invention claims priority to Chinese Patent Application No. 202311279733.9 filed on September 27, 2023 to the CNIPA, and entitled "SERVICE TRANSMISSION METHOD AND SERVICE PATH EXPANSION METHOD", and the entire content of the application is incorporated herein by reference.

### TECHNICAL FIELD

Embodiments of the present application relate to the technical field of communications, in particular to a service transmission method and a service path expansion method.

### BACKGROUND

Network expansion refers to a process where, when a certain region experiences an increased service volume and needs a new site to be added to an original network, a service path of adjacent sites needs to be disconnected, and the new site is added, thus upgrading and expanding an existing network infrastructure.

In the related art, a newly added network element can only be used for transmission of one specific service. As a result, other services cannot share resources of this network element, which leads to resource waste and a reduction in a network utilization rate of the expanded network element.

### SUMMARY

Embodiments of the present application provide a service transmission method and a service path expansion method.

In order to solve the above technical problems, the present application is implemented as follows.

In a first aspect, a service transmission method is provided and includes: constructing, in response to accessing a third network element between a first network element and a second network element, a second fine-granularity channel corresponding to a first fine-granularity channel via a port fine granularity of the third network element, wherein the third network element is a network element used for capacity expansion, and the first fine-granularity channel is a fine-granularity channel between the first network element and the second network element before accessing the third network element; and deploying a target service to the second fine-granularity channel for transmission.

In a second aspect, a service transmission method is provided. A third target network element is accessed between a first target network element and a second target network element via a port fine granularity. The service transmission method includes: constructing, in response to removing the third target network element from between the first target network element and the second target network element, a second target fine-granularity channel corresponding to a first target fine-granularity channel by adjusting the first target fine-granularity channel on the port fine granularity of the third target network element, wherein the first target fine-granularity channel is a fine-granularity channel between the first target network element and the second target network element before removing the third target network element; and deploying a target service to the second target fine-granularity channel for transmission.

In a third aspect, a service path expansion method is provided. The service path expansion method is applied to a third network element used for capacity expansion and includes: accessing, for a capacity expansion request of a target fine-granularity service between a first network element and a second network element, the third network element between the first network element and the second network element via a port fine granularity thereof to construct a second fine-granularity channel corresponding to a first fine-granularity channel, wherein the first fine-granularity channel is a fine-granularity channel between the first network element and the second network element before capacity expansion.

In a fourth aspect, an electronic device is provided and includes a processor and a memory. The memory stores a program or instructions runnable on the processor. The program or instructions, when executed by the processor, implement the method as described in the first aspect, or implement the method as described in the second aspect, or implement the method as described in the third aspect.

In a fifth aspect, a readable storage medium is provided. The readable storage medium stores at least one computer program therein. The computer program, when loaded and executed by a processor, implements the method as described in the first aspect, or implements the method as described in the second aspect, or implements the method as described in the third aspect.

In a sixth aspect, a computer program product is provided. The computer program product includes at least one computer program. The computer program is loaded and executed by a processor to implement the method as described in the first aspect or the method as described in the second aspect or the method as described in the third aspect provided in various optional implementations above.

### BRIEF DESCRIPTION OF DRAWING(S)

Accompanying drawings here are incorporated into the specification, constitute a part of the specification, show embodiments consistent with the present application, and are used to explain the principle of the present application together with the specification.
FIG. 1 shows a schematic diagram of an end-to-end fine granularity provided by an exemplary embodiment of the present application.
FIG. 2 shows a schematic flowchart of a service transmission method provided by an exemplary embodiment of the present application.
FIG. 3 shows a schematic diagram of crossing of fine-granularity channels and network elements provided by an exemplary embodiment of the present application.
FIG. 4 shows a schematic diagram of fine granularity-based network element expansion provided by an exemplary embodiment of the present application.
FIG. 5 shows another schematic diagram of fine granularity-based network element expansion provided by an exemplary embodiment of the present application.
FIG. 6 shows yet another schematic diagram of fine granularity-based network element expansion provided by an exemplary embodiment of the present application.
FIG. 7 shows another schematic diagram of a service transmission method provided by an exemplary embodiment of the present application.
FIG. 8 shows a schematic diagram of fine granularity-based network element shrinkage provided by an exemplary embodiment of the present application.
FIG. 9 shows another schematic diagram of fine granularity-based network element shrinkage provided by an exemplary embodiment of the present application.
FIG. 10 shows yet another schematic diagram of fine granularity-based network element shrinkage provided by an exemplary embodiment of the present application.
FIG. 11 shows yet another schematic diagram of a service transmission method provided by an exemplary embodiment of the present application.
**FIG.** 12 shows a schematic diagram of a service path expansion method provided by an exemplary embodiment of the present application.
FIG. 13 shows a schematic structural diagram of a fine granularity expansion and shrinkage system provided by an exemplary embodiment of the present application.
FIG. 14 shows a structural block diagram of an electronic device provided by an exemplary embodiment of the present application.

### DETAILED DESCRIPTION

Exemplary embodiments will be illustrated in detail here, and their examples are shown in accompanying drawings. When the following description refers to the accompanying drawings, unless otherwise indicated, the same numbers in different accompanying drawings indicate the same or similar elements. Implementations described in the following exemplary embodiments do not represent all implementations consistent with the present application. Rather, they are merely examples of apparatuses and methods consistent with some aspects of the present application as detailed in the appended claims.

To better understand the technical solution provided in the present application, the technology involved in the present application is first introduced.

A fine-granularity flexesubclient is created based on a flexe port flexeclient or an Ethernet port (fine-granularity mode). An end-to-end level corresponds to an end-to-end fine-granularity flexesubchannel, which includes a single-point fine granularity (flexesubclient) and a cross connection (flexesubclient cc).

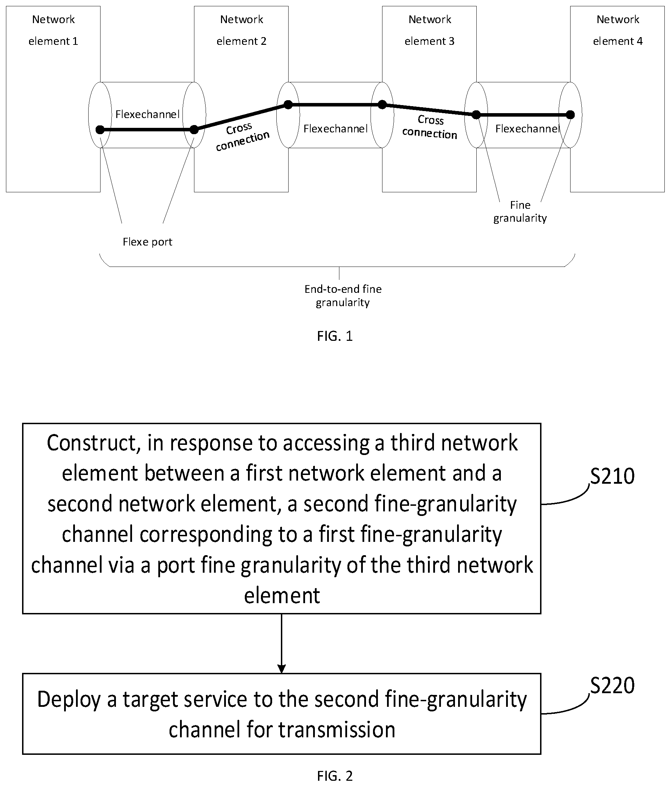

As shown in FIG. 1, in the figure, an end-to-end fine granularity penetrates through three flexechannels: a flexechannel1, a flexechannel2, and a flexechannel3. Endpoints on two sides of the flexechannel1 and the flexechannel3 are conventional flexe ports, whereas endpoints on two sides of the flexechannel2 are Ethernet ports (fine granularity mode). Fine-granularity flexesubclients are created on the endpoints (flexeclients or Ethernet ports) on the two sides of each flexechannel. Every two adjacent fine-granularity flexesubclients form a link connection (LC) or a cross connection (CC). On a single point, the LC is represented as a pair of flexesubclients with the same client no., and the CC corresponds to a binding relationship between a pair of fine granularities (flexesubclients) on left and right sides in a network element (client nos. are not necessarily the same). In the example in FIG. 1, the end-to-end fine granularity includes three LCs and two CCs. In addition, among six fine-granularity flexesubclients included in this end-to-end fine granularity, the two at edges are terminative, and the four in the middle are non-terminative. That is, the fine-granularity flexesubclients that form crosses are non-terminative, and the fine-granularity flexesubclients that do not form crosses are terminative.

FIG. 2 shows a schematic flowchart of a service transmission method provided by an exemplary embodiment of the present application. The method may be performed by an electronic device, which may include a network-side device. In other words, the method may be performed by software or hardware installed on the electronic device. The method includes the following steps.

Step S210: in response to accessing a third network element between a first network element and a second network element, a second fine-granularity channel corresponding to a first fine-granularity channel is constructed via a port fine granularity of the third network element.

The third network element is a network element used for capacity expansion, and the first fine-granularity channel is a fine-granularity channel between the first network element and the second network element before accessing the third network element.

It may be understood that port types of the first network element, the second network element, and the third network element may be flexe ports or ordinary Ethernet ports with a fine-granularity mode, and each port includes one fine granularity. The fine-granularity channel refers to a service transmission path with two ends being fine granularities. Thus, the first fine-granularity channel is a transmission path where a target service is transmitted from the first network element to the second network element. The second fine-granularity channel corresponding to the first fine-granularity channel is constructed via the port fine granularity of the third network element. Thus, one of two ends of the second fine-granularity channel is the port fine granularity of the third network element. In other words, through the port fine granularity of the third network element, the first fine-granularity channel may be divided into two, and the second fine-granularity channel may be the fine-granularity channel between the first network element and the third network element, or the fine-granularity channel between the third network element and the second network element.

Step S220: the target service is deployed to the second fine-granularity channel for transmission.

It may be understood that the second fine-granularity channel is a new transmission path determined for the target service. That is, before capacity expansion, the target service is transmitted via the first fine-granularity channel, and after capacity expansion, the transmission of the service may be completed on the second fine-granularity channel.

In the embodiment of the present application, in response to accessing the third network element for capacity expansion between the first network element and the second network element, the second fine-granularity channel corresponding to the first fine-granularity channel is constructed according to the port fine granularity of the third network element. Then, by using the second fine-granularity channel to transmit the target service, an additional service transmission path can be provided. This achieves smaller-granularity capacity expansion based on improving the utilization rate of the third network element, thereby more precisely increasing the usage rate of the network, and meeting the transmission demands of more services. In one implementation, a load of an original network link may also be shared, thus enhancing the reliability and redundancy capacity of the network.

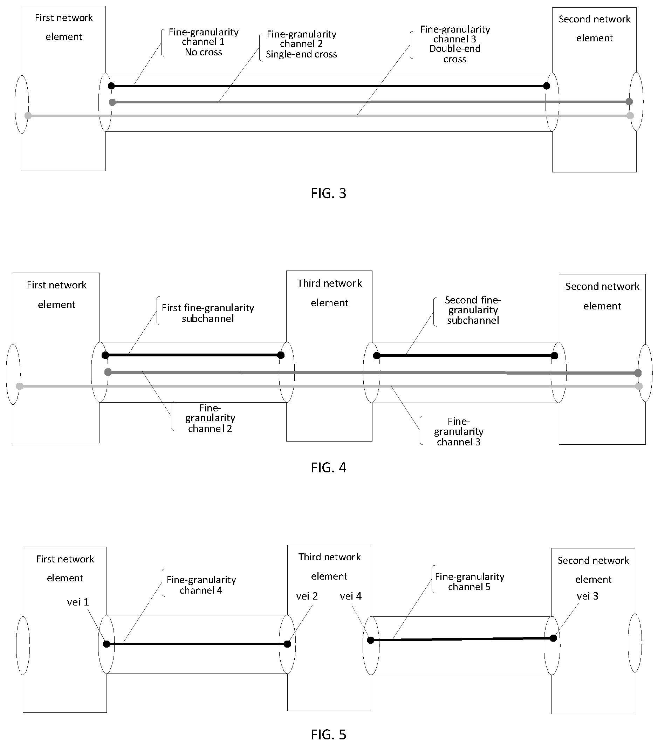

In one implementation, above step S220 may include: constructing, based on a type of the first fine-granularity channel, the second fine-granularity channel corresponding to the first fine-granularity channel via the port fine granularity of the third network element. The type of the first fine-granularity channel includes a termination type and a cross type, the termination type is used to characterize that the fine-granularity channel terminates on the first network element and the second network element, and the cross type is used to characterize that the fine-granularity channel has a cross on at least one of the first network element or the second network element. In the embodiment of the present application, the type of the first fine-granularity channel may include the following two: the termination type and the cross type. The termination type refers to a case where the first fine-granularity channel terminates between the first network element and the second network element, i.e., the fine-granularity channel terminating on the first network element and the second network element. In other words, there is no cross connection in the first network element and the second network element. The cross type refers to a case where the first fine-granularity channel penetrates through the first network element or the second network element, i.e., the fine-granularity channel having a cross on at least one of the first network element or the second network element. In other words, there is a cross connection in the first network element or the second network element. Exemplarily, as shown in FIG. 3, a fine-granularity channel 1 belongs to the termination type, and a fine-granularity channel 2 and a fine-granularity channel 3 belong to the cross type.

Capacity expansion strategies corresponding to the above two types of the first fine-granularity channel are described respectively below.

### 1. The type of the first fine-granularity channel is the termination type.

In one implementation, in a case where the first fine-granularity channel is of the termination type, based on the type of the first fine-granularity channel, constructing the second fine-granularity channel corresponding to the first fine-granularity channel via the port fine granularity of the third network element may include: constructing, via the port fine granularity of the third network element, a first fine-granularity subchannel terminating between the first network element and the third network element, and a second fine-granularity subchannel terminating between the third network element and the second network element, wherein the second fine-granularity channel includes the first fine-granularity subchannel and the second fine-granularity subchannel. Exemplarily, as shown in FIGS. 3 and 4, the fine-granularity channel 1 in FIG. 3 is the first fine-granularity channel. By newly adding the third network element, the first fine-granularity channel is divided into the first fine-granularity subchannel and the second fine-granularity subchannel. The first fine-granularity subchannel is located between the first network element and the second network element. The second fine-granularity subchannel is located between the third network element and the second network element. The transmission path for the target service is the second fine-granularity channel. That is, the second fine-granularity channel may be the first fine-granularity subchannel or the second fine-granularity subchannel.

In one implementation, dividing the first fine-granularity channel into the first fine-granularity subchannel terminating between the first network element and the third network element, and the second fine-granularity subchannel terminating between the third network element and the second network element may include the following steps.

Step 1: a second virtual Ethernet interface corresponding to a first virtual Ethernet interface is created on a first port fine granularity of the third network element, and the first fine-granularity subchannel is constructed via the first virtual Ethernet interface and the second virtual Ethernet interface. The first virtual Ethernet interface is a virtual Ethernet interface corresponding to the first fine-granularity channel on a port fine granularity of the first network element.

As shown in FIG. 5, the first port fine granularity of the third network element refers to the port fine granularity close to the first network element. The first virtual Ethernet interface is vei 1 on the port fine granularity of the first network element. The second virtual Ethernet interface is vei 2 on the port fine granularity of the third network element. vei 1 and vei 2 may construct the first fine-granularity subchannel.

There may be a plurality of corresponding first virtual Ethernet interfaces on the port fine granularity of the first network element. Thus, second virtual Ethernet interfaces with the same number as the virtual Ethernet interfaces on the port fine granularity of the first network element may be created on the first port fine granularity of the third network element. One first virtual Ethernet interface and one second virtual Ethernet interface may form one first fine-granularity subchannel. Thus, a plurality of first fine-granularity subchannels may be provided, and the target service may be deployed to any one of the first fine-granularity subchannels.

Step 2: a fourth virtual Ethernet interface corresponding to a third virtual Ethernet interface is created on a second port fine granularity of the third network element, and the second fine-granularity subchannel is constructed via the third virtual Ethernet interface and the fourth virtual Ethernet interface. The third virtual Ethernet interface is a virtual Ethernet interface corresponding to the first fine-granularity channel on a port fine granularity of the second network element.

Continuing to refer to FIG. 5, the second port fine granularity of the third network element refers to the port fine granularity close to the second network element. The third virtual Ethernet interface is vei 3 on the port fine granularity of the second network element. The fourth virtual Ethernet interface is vei 4 on the port fine granularity of the third network element. vei 3 and vei 4 may construct the second fine-granularity subchannel.

There may be a plurality of corresponding third virtual Ethernet interfaces on the port fine granularity of the second network element. Thus, fourth virtual Ethernet interfaces with the same number as the virtual Ethernet interfaces on the port fine granularity of the second network element may be created on the second port fine granularity of the third network element. One third virtual Ethernet interface and one fourth virtual Ethernet interface may form one second fine-granularity subchannel. Thus, a plurality of second fine-granularity subchannels may be provided, and the target service may be deployed to any one of the second fine-granularity subchannels. In a conventional capacity expansion approach, when a network undergoes capacity expansion and shrinkage changes, a system can automatically detect the changes and accordingly update virtual router information and access device configurations, thereby enabling the network to adapt to new scales and demands. However, this capacity expansion approach involves direct capacity expansion of a network element, meaning that the expanded network element can only be used to transmit one service, whereas in this implementation, the expanded third network element may be used to transmit a plurality of services. It should be noted that a plurality of fine-granularity subchannels may be created on one fine-granularity channel, and virtual Ethernet interfaces on two sides of each fine-granularity subchannel have the same vlan, with IPs in the same network segment.

In another implementation, an IP address corresponding to the second virtual Ethernet interface is set as an IP address corresponding to the first fine-granularity channel on the port fine granularity of the second network element; or, an IP address corresponding to the fourth virtual Ethernet interface is set as an IP address corresponding to the first fine-granularity channel on the port fine granularity of the first network element. It may be understood that before capacity expansion, the transmission path for the target service is the first fine-granularity channel. In a case where the type of the first fine-granularity channel is the termination type, a starting point of the first fine-granularity channel is the port fine granularity of the first network element, and a terminating point is the port fine granularity of the second network element. If the first fine-granularity subchannel is selected to transmit the target service, then a starting point of the first fine-granularity subchannel is the same as that of the first fine-granularity channel, and a terminating point is the second virtual Ethernet interface on the first port fine granularity of the third network element. Thus, the IP address corresponding to the second virtual Ethernet interface needs to be set as the IP address corresponding to the first fine-granularity channel on the port fine granularity of the second network element. Similarly, if the second fine-granularity subchannel is selected to transmit the target service, then a starting point of the second fine-granularity subchannel is the same as the terminating point of the first fine-granularity channel, and a starting point is the fourth virtual Ethernet interface on the second port fine granularity of the third network element. Thus, the IP address corresponding to the fourth virtual Ethernet interface needs to be set as the IP address corresponding to the first fine-granularity channel on the port fine granularity of the first network element.

### 2. The type of the first fine-granularity channel is the cross type.

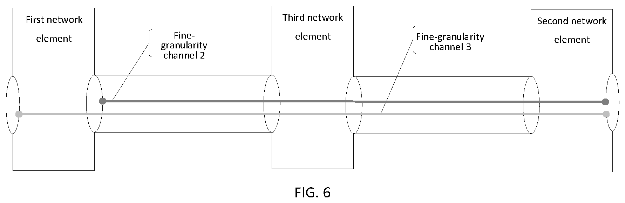

In one implementation, in a case where the first fine-granularity channel is of the cross type, constructing the second fine-granularity channel corresponding to the first fine-granularity channel via the port fine granularity of the third network element includes: constructing the second fine-granularity channel by making the first fine-granularity channel penetrate through the third network element in a cross form. Continuing to refer to FIG. 3 above, the fine-granularity channel 2 has a cross with the second network element. That is, the fine-granularity channel 2 penetrates through the second network element, forming a cross connection (cc) in the second network element. The fine-granularity channel 3 has crosses with the first network element and the second network element respectively. That is, the fine-granularity channel 3 penetrates through the first network element and the second network element, and cross connections (ccs) are formed in the first network element and the second network element respectively. This indicates that the fine-granularity channel 2 and the fine-granularity channel 3 do not terminate on the second network element. That is, the services corresponding to the fine-granularity channel 2 and the fine-granularity channel 3 need to continue being transmitted to the next network element. Thus, as shown in FIG. 6, after the third network element is expanded between the first network element and the second network element, the fine-granularity channel 2 and the fine-granularity channel 3 will continue to penetrate through the third network element, i.e., not terminating on the third network element. Thus, the second fine-granularity channel may be constructed by making the first fine-granularity channel penetrate through the third network element in the cross form, but the starting point of the second fine-granularity channel does not change.

In one implementation, before constructing the second fine-granularity channel corresponding to the first fine-granularity channel via the port fine granularity of the third network element, the method may further include: forcibly switching the target service to a protection path in a case of determining that the protection path meets a transmission demand of the target service. In another implementation, deploying the target service to the second fine-granularity channel for transmission includes: forcibly switching the target service from the protection path to the second fine-granularity channel in a case of determining that the second fine-granularity channel meets the transmission demand of the target service. It may be understood that capacity expansion or shrinkage in an optical transmission network refers to a process where, when a certain region experiences an increased or decreased service volume and needs a new site to be added or deleted in or from an original network, an optical fiber of adjacent sites needs to be disconnected, and the new site is added. In addition to fiber disconnecting, site adding, and fiber connecting operations needed for hardware, the capacity expansion or shrinkage process also needs relevant data configurations for software on a network management system. During a capacity expansion operation, because a target service is running in the original network and the optical fiber needs to be disconnected during capacity expansion, in order not to affect the running target service during capacity expansion, a forced switching operation needs to be performed for the target service on the network management system before capacity expansion, to switch the service to the protection path. After determining that the fiber disconnection does not affect the target service, the capacity expansion operation may begin. After the capacity expansion is finished, configuration data needs to be issued via the network management system to the site where data changes, and the previous protection switching is cleared at the same time. That is, the target service is made return to a newly determined working path for transmission.

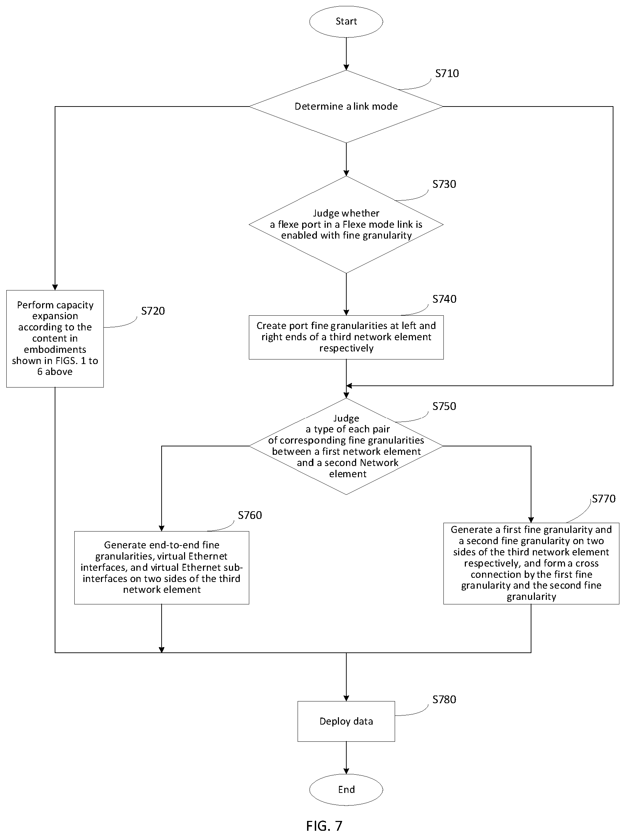

One application scenario for various embodiments above is described below. As shown in FIG. 7, it is another schematic diagram of an end-to-end fine granularity provided by an exemplary embodiment of the present application. The following steps may be included.

Step S710: a link mode is determined.

If the link mode is an Ethernet mode link, step S720 is performed. If the link mode is a Flexe mode link, step S730 is performed. If the link mode is a fine-granularity mode link, step S750 is performed.

Step S720: capacity expansion is performed according to the content in the embodiments shown in FIGS. 1 to 6 above.

Step S730: whether a flexe port in the Flexe mode link is enabled with fine granularity is judged.

If the flexe port in the Flexe mode link is not enabled with fine granularity, step S720 is performed. If the flexe port in the Flexe mode link is enabled with fine granularity, step S740 is performed.

Step S740: port fine granularities are created at left and right ends of the third network element respectively.

The third network element is a network element accessed between the first network element and the second network element for capacity expansion.

Step S750: the type of each pair of corresponding fine granularities between the first network element and the second network element is judged.

The type includes: shared and others, wherein "others" refers to ordinary fine granularities under the port of the fine-granularity mode or fine granularities under the flexe port flexeclient. If the type of each pair of corresponding fine granularities between the first network element and the second network element is shared, step S760 is performed. If the type of each pair of corresponding fine granularities between the first network element and the second network element is others, step S770 is performed.

Step S760: end-to-end fine granularities, virtual Ethernet interfaces, and virtual Ethernet subinterfaces are generated on two sides of the third network element.

Step S770: a first fine granularity and a second fine granularity are generated on the two sides of the third network element respectively, and a cross connection is formed by the first fine granularity and the second fine granularity.

Step S780: data is deployed.

An interface call for updating end-to-end fine-granularity routing is added to the deployment process before capacity expansion. The interface is provided by an end-to-end component.

In this embodiment, different capacity expansion strategies are selected according to different mode links. The Ethernet mode link may be expanded according to the content in the embodiments shown in FIGS. 1 to 6 above. For the Flexe mode link, it is necessary to determine whether fine granularity enabling is present. Based on the presence of fine granularity enabling, the capacity expansion strategy is determined according to the type of each pair of corresponding fine granularities between the first network element and the second network element. For the fine-granularity mode link, the capacity expansion strategy is determined according to the type of each pair of corresponding fine granularities between the first network element and the second network element. Thus, this embodiment can flexibly determine the capacity expansion strategies according to different application scenarios.

In the various embodiments above, capacity expansion of the network transmission path is achieved by adding the third network element. Thus, for example, when the third network element may be in an idle state due to a decreased service volume in a certain region, the third network element may be removed from the original network. That is, the third network element needs to be deleted from the original network. Since the type of the first fine-granularity channel includes the termination type and the cross type, that is, the type of the first fine-granularity channel corresponds to two capacity expansion modes, in one implementation, the type of the first fine-granularity channel may also correspond to two capacity shrinkage modes.
(1) After constructing, via the port fine granularity of the third network element, the first fine-granularity subchannel terminating between the first network element and the third network element, and the second fine-granularity subchannel terminating between the third network element and the second network element, the method also includes: docking, in response to removing the third network element from between the first network element and the second network element, the first fine-granularity subchannel with the second fine-granularity subchannel to obtain the first fine-granularity channel.
(2) After constructing the second fine-granularity channel by making the first fine-granularity channel penetrate through the third network element in the cross form, the method also includes: deleting, in response to removing the third network element from between the first network element and the second network element, a cross node, corresponding to the port fine granularity of the third network element, on the second fine-granularity channel penetrating through the third network element in the cross form to obtain the first fine-granularity channel.

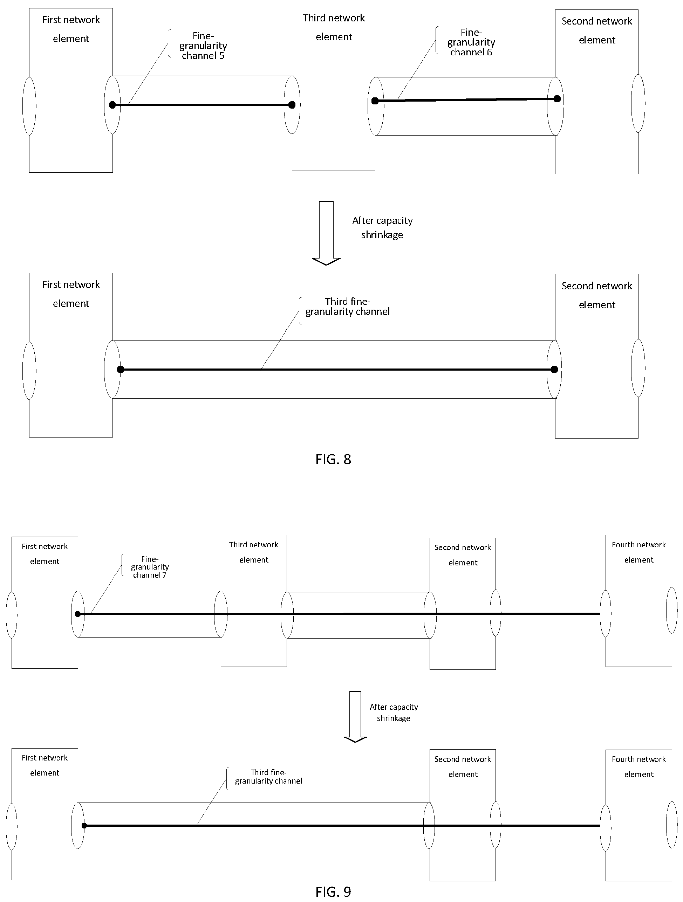

As shown in FIG. 8, a fine-granularity channel 5 terminates between the first network element and the third network element, and a fine-granularity channel 6 terminates between the third network element and the second network element. Thus, when the third network element is removed, that is, when capacity shrinkage is performed, the fine-granularity channel 5 and the fine-granularity channel 6 may be merged to form a third fine-granularity channel. Or, as shown in FIG. 9, a fine-granularity channel 7 does not terminate between the first network element and the second network element, but instead penetrates through the third network element in a cross form. Thus, when the third network element is removed, that is, when capacity shrinkage is performed, a cross node between the fine-granularity channel 7 and the third network element may be deleted. Since a starting point and a terminating point of the fine-granularity channel 7 do not change, the first fine-granularity channel can be formed simply by deleting the cross node with the third network element.

In this implementation, capacity shrinkage of a network element where an endpoint on one side of the crossed fine-granularity channel is located is not supported. A service corresponding to the fine-granularity channel may be a private line service. For example, capacity shrinkage of a tunnel PE node is prohibited. In addition, for E1 over fiber transmission, capacity shrinkage of a network element where an endpoint of the service is located is not supported either.

For the first fine-granularity channel that is formed again by capacity shrinkage and matched docking of the first fine-granularity subchannel and the second fine-granularity subchannel, IP addresses corresponding to the virtual Ethernet interfaces at two ends need to be adjusted to meet the docking requirements. For the capacity shrinkage approach shown in FIG. 8, the IP address corresponding to the port fine granularity on the first network element may be set as the IP address corresponding to the fourth virtual Ethernet interface, or the IP address corresponding to the port fine granularity on the second network element may be set as the IP address corresponding to the third virtual Ethernet interface. The third virtual Ethernet interface is a virtual Ethernet interface corresponding to the first fine-granularity subchannel on the port fine granularity of the third network element. The fourth virtual Ethernet interface is a virtual Ethernet interface corresponding to the second fine-granularity subchannel on the port fine granularity of the third network element. For the capacity shrinkage approach shown in FIG. 9, since the capacity shrinkage action does not change the endpoints and length of the fine-granularity channel 7, the IP addresses corresponding to the virtual Ethernet interfaces at two ends do not need to be adjusted.

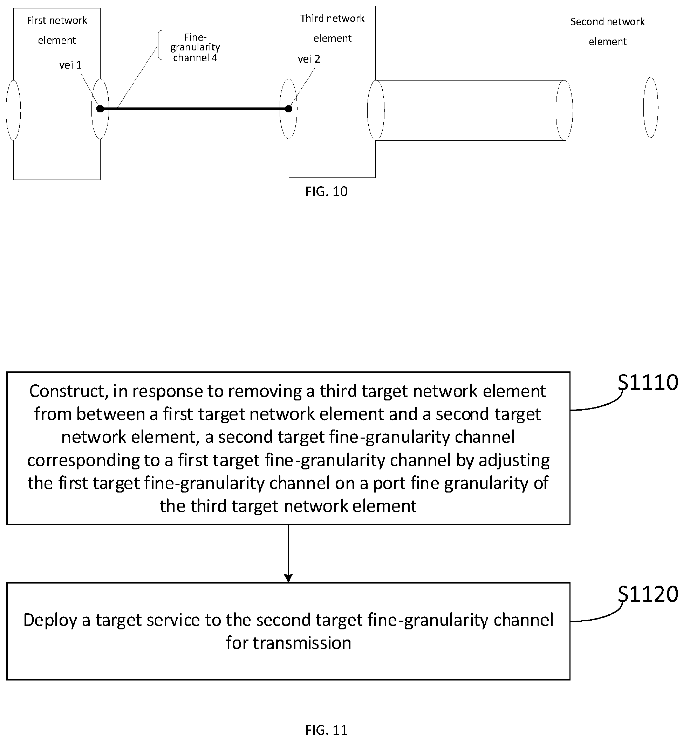

Before determining that the third network element between the first network element and the second network element is removed, the method may also include: deleting a fine-granularity channel that terminates on the third network element and does not match with any port fine granularity on the second network element. Exemplarily, as shown in FIG. 8, during capacity expansion, the IP address corresponding to the virtual Ethernet interface of the fine-granularity channel 5 on the third network element is set as the IP address corresponding to the first fine-granularity channel on the port fine granularity of the second network element. During capacity shrinkage, the fine-granularity channel 5 may match with a port fine granularity on the second network element that has the same IP address as the virtual Ethernet interface on the third network element, and then fine-granularity channel 6 corresponding to the port fine granularity may be treated as the fine-granularity channel matching with the fine-granularity channel 5. As shown in FIG. 10, a fine-granularity channel 4 is used to transmit a first service. The first service terminates on the third network element and does not involve the fine-granularity channel between the third network element and the second network element. Thus, no fine-granularity channel matching with the fine-granularity channel 4 is present on the second network element, so the fine-granularity channel 4 may be deleted before the third network element is removed. In this way, by deleting the fine-granularity channel that terminates on the third network element and does not match with any port fine granularity on the second network element, it is possible to avoid problems that removing the third network element causes an error in the fine-granularity channel, which in turn affects service transmission. The reliability and fault tolerance of network transmission can thus be improved after capacity shrinkage.

In this embodiment, after transmitting the target service using the second fine-granularity channel, capacity shrinkage may also be achieved by removing the third network element. Through capacity shrinkage, the use of unnecessary hardware devices and resources may be reduced, thus achieving the objective of saving network operating costs. At the same time, it can lower the complexity of a network system and simplify network administration and maintenance. Since the third network element is removed, nodes of the service transmission path are reduced, which can improve the service transmission speed.

As shown in FIG. 11, it is yet another schematic diagram of a service transmission method provided by an exemplary embodiment of the present application. A third target network element is accessed between a first target network element and a second target network element via a port fine granularity. The method may include the following steps.

Step S1110: in response to removing the third target network element from between the first target network element and the second target network element, a second target fine-granularity channel corresponding to a first target fine-granularity channel is constructed by adjusting the first target fine-granularity channel on the port fine granularity of the third target network element.

The first target fine-granularity channel is a fine-granularity channel between the first target network element and the second target network element before removing the third target network element. The type of the first target fine-granularity channel may include a termination type and a cross type, the termination type is used to characterize that the fine-granularity channel terminates on the first target network element and the second target network element, and the cross type is used to characterize that the fine-granularity channel has a cross on at least one of the first target network element or the second target network element. In a case where the type of the first target fine-granularity channel is the termination type, the first target fine-granularity channel includes a first target fine-granularity subchannel terminating on the first target network element and the third target network element, and a second target fine-granularity subchannel terminating on the third target network element and the second target network element.

Step S1120: a target service is deployed to the second target fine-granularity channel for transmission.

In the embodiment of the present application, in response to removing the third target network element from between the first target network element and the second target network element, the second target fine-granularity channel corresponding to the first target fine-granularity channel is constructed by adjusting the first target fine-granularity channel on the port fine granularity of the third target network element, and then the target service is transmitted using the second target fine-granularity channel, so that the use of unnecessary hardware devices and resources may be reduced, thus achieving the objective of saving network operating costs. At the same time, it can lower the complexity of a network system and simplify network administration and maintenance. Since the third target network element is removed, nodes of the service transmission path are reduced, which can improve the service transmission speed.

In an implementation, before constructing the second target fine-granularity channel corresponding to the first target fine-granularity channel, the method further includes: deleting a fine-granularity channel that terminates on the third target network element and does not match with any port fine granularity on the second target network element.

It should be noted that the specific content of this embodiment may refer to the relevant descriptions in the embodiments shown in FIGS. 1 to 10 and will not be repeated here.

In another implementation, the first target fine-granularity channel includes a first target fine-granularity subchannel terminating on the first target network element and the third target network element, and a second target fine-granularity subchannel terminating on the third target network element and the second target network element. Constructing the second target fine-granularity channel corresponding to the first target fine-granularity channel by adjusting the first target fine-granularity channel on the port fine granularity of the third target network element includes: docking the first target fine-granularity subchannel with the second target fine-granularity subchannel to obtain the second target fine-granularity channel.

It should be noted that the specific content of this embodiment may refer to the relevant descriptions in the embodiments shown in FIGS. 1 to 10 and will not be repeated here.

In yet another implementation, the first target fine-granularity channel includes a fine-granularity channel that penetrates through the third target network element in a cross form. Constructing the second target fine-granularity channel corresponding to the first target fine-granularity channel by adjusting the first target fine-granularity channel on the port fine granularity of the third target network element includes: deleting a cross node on the first target fine-granularity channel that corresponds to the port fine granularity of the third target network element to obtain the second target fine-granularity channel.

It should be noted that the specific content of this embodiment may refer to the relevant descriptions in the embodiments shown in FIGS. 1 to 10 and will not be repeated here.

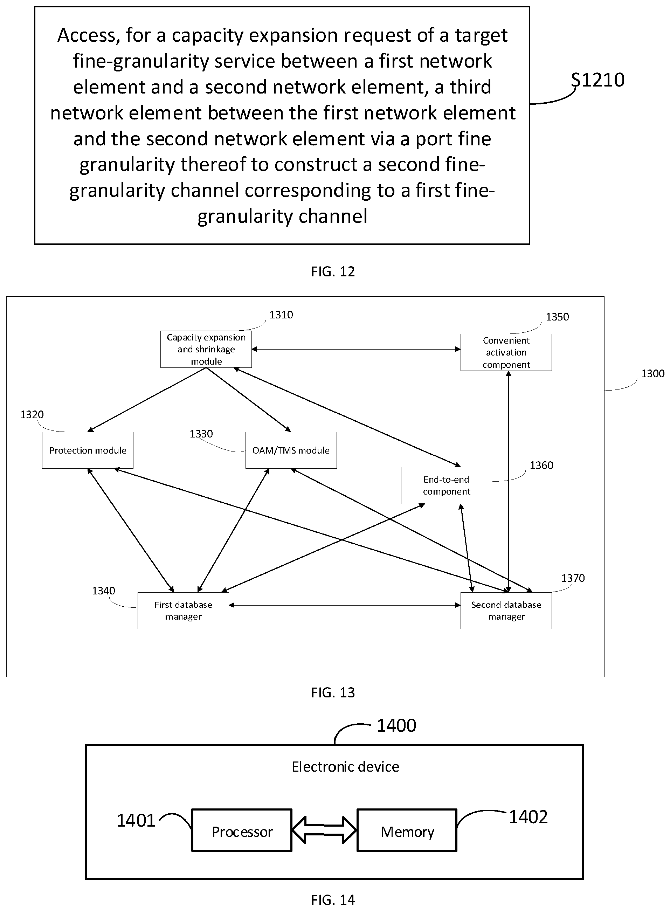

As shown in FIG. 12, it is yet another schematic diagram of a service transmission method provided by an exemplary embodiment of the present application. The method is applied to a third network element used for capacity expansion and may include the following steps.

Step S1210: for a capacity expansion request of a target fine-granularity service between a first network element and a second network element, the third network element is accessed between the first network element and the second network element via a port fine granularity thereof to construct a second fine-granularity channel corresponding to a first fine-granularity channel.

The first fine-granularity channel is a fine-granularity channel between the first network element and the second network element before capacity expansion.

In the embodiment of the present application, for the capacity expansion request of the target fine-granularity service, the third network element is accessed between the first network element and the second network element via the port fine granularity thereof to construct the second fine-granularity channel corresponding to the first fine-granularity channel. An additional service transmission path can be provided. This achieves smaller-granularity capacity expansion based on improving the utilization rate of the third network element, thereby more precisely increasing the usage rate of the network, and meeting the transmission demands of more services. A load of an original network link may also be shared, thus enhancing the reliability and redundancy capacity of the network.

As shown in FIG. 13, it is a schematic structural diagram of a fine-granularity capacity expansion and shrinkage system provided by the present application based on the various embodiments above. The fine-granularity capacity expansion and shrinkage system 1300 includes: a capacity expansion and shrinkage module 1310, a protection module 1320, an operation administration and maintenance (OAM)/time-multiplexed switching (TMS) module 1330, a first database manager 1340, a convenient activation component 1350, an end-to-end component 1360, and a second database manager 1370. The capacity expansion and shrinkage module 1310 is configured to receive and execute fine-granularity capacity expansion and shrinkage. The protection module is configured to forcibly switch a service before capacity expansion to a protection path. The OAM/TMS module 1330 is configured to monitor whether available protection paths are available and sufficient, monitor whether expanded paths are available and sufficient, and notify the protection module to forcibly switch the service before capacity expansion to the expanded paths. The first database manager 1340, the convenient activation component 1350, the end-to-end component 1360, and the second database manager 1370 are all configured to assist the capacity expansion and shrinkage module in performing capacity expansion and shrinkage. The first database manager may be su31-nme2e, and the second database manager may be su31-em.

In the fine-granularity capacity expansion and shrinkage system, the capacity expansion and shrinkage module obtains segment layer protection, TMS, and OAM calculation results in a shared ring scenario utilizing computational capabilities provided by the protection module and the OAM/TMS module, and obtains data change results of a shared ring tunnel and its TNP and MPLS-TP tunnels through the end-to-end component, thereby completing the deployment of end-to-end service data. During the data change calculation process, the protection module, the OAM/TMS module, and the end-to-end component involve data access to the first database manager and the second database manager.

As shown in FIG. 14, an embodiment of the present application further provides an electronic device 1400, including a processor 1401 and a memory 1402. The memory 1402 stores a program or instructions that can run on the processor 1401. The program or instructions, when executed by the processor 1401, implement various processes of the above embodiments shown in FIGS. 1 to 13, and can achieve the same technical effects, which will be omitted here in order to avoid repetition.

An embodiment of the present application further provides a readable storage medium, the readable storage medium stores a program or instructions thereon, and the program or instructions, when executed by a processor, implement the various processes of the above embodiments shown in FIGS. 1 to 13, and can achieve the same technical effects, which will be omitted here in order to avoid repetition.

The processor is a processor in the terminal described in the above embodiment. The readable storage medium includes a computer-readable storage medium such as a computer read-only memory (ROM), a random access memory (RAM), a magnetic disk or an optical disk, etc. In some examples, the readable storage medium may be a non-transient readable storage medium.

An embodiment of the present application further provides a chip, the chip includes a processor and a communication interface, the communication interface and the processor are coupled, and the processor is configured to run a program or instructions to implement the various processes of the above embodiments shown in FIGS. 1 to 13, and can achieve the same technical effects, which will be omitted here in order to avoid repetition.

It should be understood that the chip referred to in the embodiment of the present application may also be referred to as a system level chip, a system chip, a chip system, or a chip of a system on chip, etc.

An embodiment of the present application further provides a computer program/program product. The computer program/program product is stored in a storage medium. The computer program/program product is executed by at least one processor to implement the various processes of the above embodiments shown in FIGS. 1 to 13, and can achieve the same technical effects, which will be omitted here in order to avoid repetition.

It needs to be noted that in this context, terms "include", "contain", or any other variant thereof, are intended to cover non-exclusive inclusion, so that a process, method, item or apparatus that includes a series of elements includes not only those elements but also other elements that are not explicitly listed or further includes elements that are inherent to such a process, method, item or apparatus. Without more limitations, an element defined by a phrase "including a ..." does not exclude the existence of other identical elements in the process, method, item or apparatus including the element. In addition, it needs to be noted that the scopes of the methods and apparatuses in the embodiments of the present application are not limited to performing the functions in the order shown or discussed, but may also include performing the functions in a substantially simultaneous mode or in a reverse order according to the functions involved, e.g., the described methods may be performed in a different order than described, and various steps may be added, omitted, or combined. In addition, features described with reference to some examples may be combined in other examples.

Through the description of the above implementations, those of skill in the art can clearly understand the above embodiment methods can be realized by means of a computer software product plus a necessary general hardware platform, and certainly can also be realized by hardware. The computer software product is stored in a storage medium (such as a ROM, a RAM, a magnetic disc and an optical disc) and includes a plurality of instructions used to enable a terminal or a network-side device to perform the methods described in various embodiments of the present application.

The embodiments of the present application are described above in conjunction with the accompanying drawings, but the present application is not limited to the above specific implementations, and the above specific implementations are merely schematic and not limiting, and those of ordinary skill in the art, under the inspiration of the present application, can make implementations in many forms without departing from the scope of the protection of the purposes and claims of the present application, all of which are under the protection of the present application.

## Claims

1. A service transmission method, comprising:
constructing, in response to accessing a third network element between a first network element and a second network element, a second fine-granularity channel corresponding to a first fine-granularity channel via a port fine granularity of the third network element, wherein the third network element is a network element used for capacity expansion, and the first fine-granularity channel is a fine-granularity channel between the first network element and the second network element before accessing the third network element; and
deploying a target service to the second fine-granularity channel for transmission.

2. The method according to claim 1, wherein constructing the second fine-granularity channel corresponding to the first fine-granularity channel via the port fine granularity of the third network element comprises:
constructing, based on a type of the first fine-granularity channel, the second fine-granularity channel corresponding to the first fine-granularity channel via the port fine granularity of the third network element, wherein the type of the first fine-granularity channel comprises a termination type and a cross type, the termination type is used to characterize that the fine-granularity channel terminates on the first network element and the second network element, and the cross type is used to characterize that the fine-granularity channel has a cross on at least one of the first network element or the second network element.

3. The method according to claim 2, wherein in a case where the first fine-granularity channel is of the termination type, constructing the second fine-granularity channel corresponding to the first fine-granularity channel via the port fine granularity of the third network element comprises:
constructing, via the port fine granularity of the third network element, a first fine-granularity subchannel terminating between the first network element and the third network element, and a second fine-granularity subchannel terminating between the third network element and the second network element, wherein the second fine-granularity channel comprises the first fine-granularity subchannel and the second fine-granularity subchannel.

4. The method according to claim 3, wherein constructing, via the port fine granularity of the third network element, the first fine-granularity subchannel terminating between the first network element and the third network element, and the second fine-granularity subchannel terminating between the third network element and the second network element comprises:
creating a second virtual Ethernet interface corresponding to a first virtual Ethernet interface on a first port fine granularity of the third network element, and constructing the first fine-granularity subchannel via the first virtual Ethernet interface and the second virtual Ethernet interface, wherein the first virtual Ethernet interface is a virtual Ethernet interface corresponding to the first fine-granularity channel on a port fine granularity of the first network element; and
creating a fourth virtual Ethernet interface corresponding to a third virtual Ethernet interface on a second port fine granularity of the third network element, and constructing the second fine-granularity subchannel via the third virtual Ethernet interface and the fourth virtual Ethernet interface, wherein the third virtual Ethernet interface is a virtual Ethernet interface corresponding to the first fine-granularity channel on a port fine granularity of the second network element.

5. The method according to claim 4, wherein
an IP address corresponding to the second virtual Ethernet interface is set as an IP address corresponding to the first fine-granularity channel on the port fine granularity of the second network element; or,
an IP address corresponding to the fourth virtual Ethernet interface is set as an IP address corresponding to the first fine-granularity channel on the port fine granularity of the first network element.

6. The method according to claim 3, wherein after constructing, via the port fine granularity of the third network element, the first fine-granularity subchannel terminating between the first network element and the third network element, and the second fine-granularity subchannel terminating between the third network element and the second network element, the method further comprises:
docking, in response to removing the third network element from between the first network element and the second network element, the first fine-granularity subchannel with the second fine-granularity subchannel to obtain the first fine-granularity channel.

7. The method according to claim 2, wherein in a case where the first fine-granularity channel is of the cross type, constructing the second fine-granularity channel corresponding to the first fine-granularity channel via the port fine granularity of the third network element comprises:
constructing the second fine-granularity channel by making the first fine-granularity channel penetrate through the third network element in a cross form.

8. The method according to claim 7, wherein after constructing the second fine-granularity channel by making the first fine-granularity channel penetrate through the third network element in the cross form, the method further comprises:
deleting, in response to removing the third network element from between the first network element and the second network element, a cross node on the second fine-granularity channel that corresponds to the port fine granularity of the third network element to obtain the first fine-granularity channel.

9. A service transmission method, wherein a third target network element is accessed between a first target network element and a second target network element via a port fine granularity, and the method comprises:
constructing, in response to removing the third target network element from between the first target network element and the second target network element, a second target fine-granularity channel corresponding to a first target fine-granularity channel by adjusting the first target fine-granularity channel on the port fine granularity of the third target network element, wherein the first target fine-granularity channel is a fine-granularity channel between the first target network element and the second target network element before removing the third target network element; and
deploying a target service to the second target fine-granularity channel for transmission.

10. The method according to claim 9, wherein before constructing the second target fine-granularity channel corresponding to the first target fine-granularity channel, the method further comprises:
deleting a fine-granularity channel that terminates on the third target network element and does not match with any port fine granularity on the second target network element.

11. The method according to claim 9 or 10, wherein the first target fine-granularity channel comprises a first target fine-granularity subchannel terminating on the first target network element and the third target network element, and a second target fine-granularity subchannel terminating on the third target network element and the second target network element, and constructing the second target fine-granularity channel corresponding to the first target fine-granularity channel by adjusting the first target fine-granularity channel on the port fine granularity of the third target network element comprises:
docking the first target fine-granularity subchannel with the second target fine-granularity subchannel to obtain the second target fine-granularity channel.

12. The method according to claim 9 or 10, wherein the first target fine-granularity channel comprises a fine-granularity channel that penetrates through the third target network element in a cross form, and constructing the second target fine-granularity channel corresponding to the first target fine-granularity channel by adjusting the first target fine-granularity channel on the port fine granularity of the third target network element comprises:
deleting a cross node on the first target fine-granularity channel that corresponds to the port fine granularity of the third target network element to obtain the second target fine-granularity channel.

13. A service path expansion method, applied to a third network element used for capacity expansion, wherein the method comprises:
accessing, for a capacity expansion request of a target fine-granularity service between a first network element and a second network element, the third network element between the first network element and the second network element via a port fine granularity thereof to construct a second fine-granularity channel corresponding to a first fine-granularity channel, wherein the first fine-granularity channel is a fine-granularity channel between the first network element and the second network element before capacity expansion.

14. An electronic device, comprising a processor and a memory, wherein the memory stores a program or instructions runnable on the processor, and the program or instructions, when executed by the processor, implement the steps of the method according to any one of claims 1 to 13.

15. A readable storage medium, wherein the readable storage medium stores a program or instructions thereon, and the program or instructions, when executed by a processor, implement the steps of the method according to any one of claims 1 to 13.
